# EUROPÄISCHE PATENTANMELDUNG

(11) **EP 4 266 559 A1**
(43) Veröffentlichungstag der Anmeldung: **25.10.2023**
(21) Anmeldenummer: 23165922.8
(22) Anmeldetag: 31.03.2023
(51) Int. Cl.: H02K 15/00

(54) **BEARBEITUNGSVORRICHTUNG FÜR LEITERANORDNUNGEN AN EINEM MOTOR-BLECHPAKET**

(30) Priorität: 20.04.2022 DE 102022109591
(71) Anmelder: Alfing Kessler Sondermaschinen GmbH, 73433 Aalen (DE)
(72) Erfinder: STAVE, Hinrich, 72622 Nürtingen (DE); KRAUS, Bastian, 73491 Neuler (DE); GÖGGERLE, Markus, 73497 Tannhausen (DE); RÖMPP, Wolfgang, 78739 Hardt (DE)
(74) Vertreter: Patentanwälte Bregenzer und Reule Partnerschaftsgesellschaft mbB

(57) **Zusammenfassung**

Die Erfindung betrifft eine Bearbeitungsvorrichtung (10) zur Bearbeitung, insbesondere zur Entfernung, von elektrischen Leiteranordnungen (210), die in Nuten (223) eines Motor-Blechpakets (220) eines Stators oder Rotors eines elektrischen Motors angeordnet sind, wobei die Leiteranordnungen (210) vor mindestens eine Stirnseite des Motor-Blechpakets (220) vorstehen, wobei die Bearbeitungsvorrichtung eine Werkstück-Halterung (30) zum Halten des Motor-Blechpakets (220) und eine Werkzeuganordnung (40, 60) mit einem ersten Werkzeug und einem zweiten Werkzeug (42, 62) aufweist, die an einem Werkzeugträger (43, 63) der Werkzeuganordnung (40, 60) angeordnet sind und einander gegenüberliegende Werkzeugflächen (41F, 42F, 61F, 62F) zur Einwirkung auf einander entgegengesetzte Leiterflächen (214, 215) einer vor eine Nut des Motor-Blechpakets (220) vorstehenden Leiteranordnung (210) aufweisen, wobei die Werkzeuganordnung (40, 60) einen Werkzeugantrieb (45, 65) zum Antreiben der Werkzeuge relativ zueinander zwischen einer Offenstellung (OT) und einer Schließstellung (ST) aufweist, wobei die Werkzeugflächen in der Offenstellung einen größeren Abstand zu einander aufweisen als in der Schließstellung (ST), und wobei die Bearbeitungsvorrichtung eine Positioniereinrichtung (20) zur Positionierung der Werkzeuganordnung und der Werkstück-Halterung (30) relativ zueinander aufweist. Die Bearbeitungsvorrichtung ist zum Verstellen des ersten Werkzeugs (41, 61) und/oder des zweiten Werkzeugs bezüglich der Leiterflächen (214, 215) der Leiteranordnung in eine Kontaktstellung (K) und ausgehend von der Kontaktstellung (K) in eine Bearbeitungsstellung ausgestaltet, wobei die Werkzeugflächen in der Kontaktstellung (K) mit einer ersten Kraft (F1) in Kontakt mit den Leiterflächen sind und in der Bearbeitungsstellung auf die Leiteranordnung (210) mit einer gegenüber der ersten Kraft größeren zweiten Kraft (F2) zu einer Klemmung der Leiteranordnung (210) und/oder zu einem Abschneiden eines Leiterabschnitts der Leiteranordnung einwirken.

## Beschreibung

Die Erfindung betrifft eine Bearbeitungsvorrichtung zur Bearbeitung, insbesondere zur Entfernung, von elektrischen Leiteranordnungen, die in Nuten eines Motor-Blechpakets eines Stators oder Rotors eines elektrischen Motors angeordnet sind, wobei die Nuten ringförmig um eine Motorachse des Motor-Blechpakets angeordnet sind und sich zwischen einander entgegengesetzten Stirnseiten des Motor-Blechpakets erstrecken, wobei die Leiteranordnungen jeweils mindestens einen elektrischen Leiter aufweisen und vor mindestens eine Stirnseite des Motor-Blechpakets vorstehen, wobei die Bearbeitungsvorrichtung eine Werkstück-Halterung zum Halten des Motor-Blechpakets und eine Werkzeuganordnung mit einem ersten Werkzeug und einem zweiten Werkzeug aufweist, die an einem Werkzeugträger der Werkzeuganordnung angeordnet sind und einander gegenüberliegende Werkzeugflächen zur Einwirkung auf einander entgegengesetzte Leiterflächen einer vor eine Nut des Motor-Blechpakets vorstehenden Leiteranordnung aufweisen, wobei die Werkzeuganordnung einen Werkzeugantrieb zum Antreiben der Werkzeuge relativ zueinander zwischen einer Offenstellung und einer Schließstellung aufweist, wobei die Werkzeugflächen in der Offenstellung einen größeren Abstand zu einander aufweisen als in der Schließstellung, und wobei die Bearbeitungsvorrichtung eine Positioniereinrichtung zur Positionierung der Werkzeuganordnung und der Werkstück-Halterung relativ zueinander aufweist.

Das Motor-Blechpaket ist beispielsweise Bestandteil eines Stators oder Rotors des Elektromotors. Das Motor-Blechpaket enthält aufeinander geschichtete Bleche, die beispielsweise durch Verschweißung miteinander verbunden sind. Die Bleche sind in manchen Fällen sehr dünn, beispielsweise so dünn, dass sie durch Ergreifen mit einem Fingernagel ergriffen und/oder verformt werden können. Die in die Nuten des Motor-Blechpakets eingelegten Leiteranordnungen umfassen beispielsweise Leiter aus Aluminium oder Kupfer, sind also an sich weich und nachgiebig und jedenfalls weicher als die Fläche des Motor-Blechpakets. Allerdings sind derartige Leiteranordnungen regelmäßig an ihren vor die Stirnseite des Motor-Blechpakets vorstehenden Leiterabschnitten umgeformt, zum Beispiel zu Wickelköpfen, und/oder miteinander verbunden. Zudem kann eine Leiteranordnung, die in einer Nut des Motor-Blechpakets aufgenommen ist, einen großen Querschnitt aufweisen und/oder massive Leiterstäbe umfassen. Somit kann es beim Abschneiden eines Leiterabschnitts, der vor eine Stirnseite des Motor-Blechpakets vorsteht, oder beim Ergreifen eines solchen Leiterabschnitts durch ein Handhabungswerkzeug zu Krafteinwirkungen der Leiteranordnung auf das Motor-Blechpaket kommen, die das Motor-Blechpaket beschädigen. Somit ist also eine Entfernung der Leiteranordnungen aus dem Motor-Blechpaket in der Regel mit einer Beschädigung des Motor-Blechpakets verbunden, was beispielsweise eine Reparatur des Motors erschwert oder gar unmöglich macht.

Es ist daher die Aufgabe der vorliegenden Erfindung, eine verbesserte Bearbeitungsvorrichtung bereitzustellen.

Zur Lösung der Aufgabe ist bei einer Bearbeitungsvorrichtung der eingangs genannten Art vorgesehen, dass sie zum Verstellen des ersten Werkzeugs und/oder des zweiten Werkzeugs bezüglich der Leiterflächen der Leiteranordnung in eine Kontaktstellung und ausgehend von der Kontaktstellung in eine Bearbeitungsstellung ausgestaltet ist, wobei die Werkzeugflächen in der Kontaktstellung mit einer ersten Kraft in Kontakt, insbesondere in Berührkontakt, mit den Leiterflächen sind und in der Bearbeitungsstellung auf die Leiteranordnung mit einer gegenüber der ersten Kraft größeren zweiten Kraft zu einer Klemmung der Leiteranordnung und/oder zu einem Abschneiden eines Leiterabschnitts der Leiteranordnung einwirken.

Es ist dabei ein Grundgedanke, dass die Werkzeuge nicht sofort mit einer klemmenden oder schneidenden Kraft auf eine Leiteranordnung, die in einer Nut des Motor-Blechpakets aufgenommen ist und vor einen der Stirnseiten des Motor-Blechpakets vorsteht, einzuwirken, sondern zunächst einen Kontakt, insbesondere einen Berührkontakt zu den Leiterflächen herstellen und erst dann, wenn beide Werkzeugflächen an den Leiterflächen anliegen, im Sinne einer Klemmung oder im Sinne eines Abschneidens auf die Leiteranordnung einwirken. In der Kontaktstellung wird zunächst also keine Verformung oder Umformung der Leiteranordnung durch die Werkzeuge bewirkt oder eingeleitet.

Die Leiteranordnung umfasst beispielsweise Leiterstäbe oder mindestens einen Leiterstab.

Die erfindungsgemäße Vorrichtung ermöglicht beispielsweise eine Entfernung einer Leiteranordnung aus dem Motor-Blechpaket, ohne dass das Motor-Blechpaket und/oder die Leiteranordnung dabei beschädigt wird. Dadurch ist beispielsweise eine Reparatur, beispielsweise ein Ersatz der Leiteranordnung, möglich. Auch für eine sortenreine Trennung der Materialien von Motor-Blechpaket und der Leiteranordnungen, beispielsweise Elektroblech und Kupfer, am Ende eines Lebenszyklus' des Motors eignet sich die Erfindung.

Eine bevorzugte Ausführungsform sieht vor, dass die erste Kraft so klein ist, dass die Leiteranordnung durch die jeweilige Werkzeugfläche nicht relativ zu dem Motor-Blechpaket verformbar ist und/oder nicht schneidbar ist.

Eine vorteilhafte Ausgestaltung der bisher erläuterten Bearbeitungsvorrichtung oder auch eine an sich eigenständige Erfindung, insbesondere mit den Merkmalen des Oberbegriffs des Anspruchs 1, stellt es dar, wenn vorgesehen ist, dass das erste Werkzeug und/oder das zweite Werkzeug eine Schneidklinge aufweist und/oder dass die Werkzeugflächen des ersten Werkzeugs und/oder des zweiten Werkzeugs eine Schneidklinge bilden und/oder aufweisen. Es ist möglich, dass eines der Werkzeuge eine Schneidkante bereitstellt, an der das zweite Werkzeug mit einer Schneidklinge entlang fährt.

Bevorzugt ist es, wenn beide Werkzeuge eine Schneidklinge aufweisen.

Die Schneidklingen weisen Schneidflächen auf, die in einem Schneidwinkel zueinander winkelig sind. Die Schneidflächen sind z.B. V-förmig. Die Schneidflächen bilden z.B. eine Schneidkante aus.

Die Schneidklinge ist beispielsweise eine Klinge mit einem Schneidwinkel von weniger als 50°, insbesondere weniger als 45° oder weniger als 40°. Besonders sind bei der Schneidklinge Schneidwinkel von weniger als 30°.

Es ist auch möglich, dass die Schneidklingen unterschiedliche Schneidwinkel aufweisen, d. h. beispielsweise eine Schneidklinge einen größeren Schneidwinkel als die andere Schneidklinge aufweist.

Bevorzugt ist vorgesehen, dass die mindestens eine Schneidklinge, insbesondere beide Schneidklingen, eine geradlinige Form oder eine gebogene Form oder zueinander winkelige Klingenabschnitte hat.

Vorzugsweise hat eine Schneidkante der jeweiligen Schneidklinge eine geradlinige oder gebogene Form oder zueinander winkelige Schneidkanten.

Weiterhin vorteilhaft ist es, wenn eine Schneidkante der Schneidklinge parallel zu der Leiterfläche verläuft, wenn die Schneidklinge in der Kontaktstellung an der Leiterfläche anliegt.

Insbesondere dann, wenn beispielsweise in Umfangsrichtung um die Motorachse in einem Winkelabstand zueinander angeordnete Leiteranordnung durch eine Schneidklinge zu bearbeiten sind, ist es vorteilhaft, wenn die Schneidklinge eine gebogene, insbesondere eine kreisbogenförmige, Gestalt aufweist. Insbesondere vorteilhaft ist es, wenn die Schneidklinge einen Radius aufweist, der etwa dem Radius einer Umhüllenden der Leiterflächen entspricht, an denen die jeweilige Schneidklinge zur Anlage in der Kontaktstellung gelangt. Eine bezüglich der Motorachse oder einer Mittelachse der Werkzeughalterung radial innere Schneidklinge ist vorzugsweise konvex. Eine radial äußere Schneidklinge bezüglich der Motorachse oder einer Mittelachse der Werkzeughalterung ist vorzugsweise konkav.

Es ist auch möglich, dass die Klingenabschnitte einen Winkel zueinander aufweisen, der demjenigen Winkel entspricht, den die Leiterflächen, die einen Winkelabstand in Umfangsrichtung bezüglich der Motorachse aufweisen, zueinander aufweisen.

Ein Vorteil auf das Konzept sieht vor, dass die mindestens eine Schneidklinge als eine Messerklinge ausgestaltet ist. Mithin weist also die Schneidklinge einen kleinen Schneidwinkel auf.

Vorteilhaft ist vorgesehen, dass die Schneidklingen aufeinander zu gerichtet sind. Somit schneiden die Schneidklingen voneinander entgegengesetzten Seiten in die Leiteranordnung ein.

Die Schneidklingen können beispielsweise so angeordnet sein, dass sie scherenartig aneinander vorbei bewegbar sind.

Bevorzugt ist vorgesehen, dass die Schneidklingen, insbesondere deren Schneidkanten in der Bearbeitungsstellung miteinander fluchten. Mithin können also die Schneidkanten unmittelbar einander gegenüberliegen.

Besonders bei dieser Konfiguration ist es vorteilhaft, wenn die Werkzeuge in der Schließstellung jeweils an einem Anschlag anschlagen, sodass die Werkzeugflächen zwar einander gegenüberliegen, jedoch nicht aufeinander auftreffen. Somit werden beispielsweise Beschädigungen vermieden, wenn die Werkzeugflächen als Schneidklingen ausgestaltet sind oder Schneidklingen umfassen. Vorzugsweise ist vorgesehen, dass eine Anschlagposition des jeweiligen Werkzeugs an dem Anschlag einstellbar ist, beispielsweise durch Verstellung eines Anschlagkörpers anhand einer Einstelleinrichtung.

Alternativ oder ergänzend zu der Ausgestaltung eines oder beider Werkzeuge als Schneidwerkzeuge ist es vorteilhaft, wenn die Werkzeuganordnung zu einer Klemmung mindestens einer Leiteranordnung ausgestaltet ist, beispielsweise um die Leiteranordnung aus dem Motor-Blechpaket zu entfernen, insbesondere herauszuziehen.

Eine vorteilhafte Maßnahme stellt es dar, wenn die Werkzeugflächen des ersten Werkzeugs und des zweiten Werkzeugs als Klemmflächen, insbesondere als Klemmbacken, ausgestaltet sind oder Klemmflächen aufweisen.

Es ist auch möglich, dass die Werkzeugflächen, insbesondere die Klemmflächen, eine Hakenkontur umfassen, beispielsweise um einen Kopfabschnitt einer Leiteranordnung im Sinne eines Einhakens zu ergreifen.

Vorteilhaft ist die Bearbeitungsvorrichtung zu einem Ausziehen mindestens einer Leiteranordnung aus einer Nut des Motor-Blechpakets ausgestaltet und vorgesehen. Bei dem Ausziehen wirkt eine Zugkraft, beispielsweise über die Werkzeuge, auf die Leiteranordnung, was vorteilhaft dazu führt, dass die Leiteranordnung im Bereich der Nut des Motor-Blechpakets zu einem kleineren Querschnitt verformt wird. Durch diese Maßnahme kann die Leiteranordnung leichter aus der Nut herausgezogen werden.

Vorteilhaft ist vorgesehen, dass der Werkzeugträger der Werkzeuganordnung an einer Werkzeughalterung beweglich, insbesondere schwimmend, gelagert ist, sodass die Werkzeuge nacheinander in die Kontaktstellung verstellbar sind, wobei sich ein Werkzeug nach Erreichen der Kontaktstellung an der Leiteranordnung abstützt, bis das andere Werkzeug in die Kontaktstellung gelangt. Somit können also beispielsweise beide Werkzeuge gleichzeitig durch den Werkzeugantrieb in Richtung der Kontaktstellung verstellt werden, wobei zunächst das eine Werkzeug in Kontakt mit der Leiteranordnung gelangt und sich somit an der Leiteranordnung abstützen kann, wobei eine weitere Betätigung des Werkzeugantriebs das gegenüberliegende, andere Werkzeug in Richtung der Kontaktstellung mit der Leiteranordnung verstellt. Dabei wird auch der Werkzeugträger verstellt, insbesondere in Richtung des bereits an der Leiteranordnung abgestützten Werkzeugs, bis beide Werkzeuge die Kontaktstellung erreicht haben. Sodann verstellt der Werkzeugantrieb die Werkzeuge weiter in Richtung der Bearbeitungsstellung. Mithin richtet sich also bei einer derartigen Betätigung die Werkzeuganordnung an der zu bearbeitenden Leiteranordnung sozusagen aus oder zentriert sich bezüglich der Leiteranordnung. Dabei üben die Werkzeuge bis zum Erreichen der Kontaktstellung wenig Kraft auf die Leiteranordnung aus, nämlich nur eine Stützkraft, mit der sich das erste in Kontaktstellung befindliche Werkzeug an der Leiteranordnung abstützt, bis das andere Werkzeug die Kontaktstellung erreicht hat.

Die Beweglichkeit des Werkzeugträgers bezüglich der Werkzeughalterung umfasst vorzugsweise mindestens einen linearen Bewegungsfreiheitsgrad, insbesondere parallel zur einer Bewegungsachse, entlang derer eines oder beide Werkzeuge zwischen der Offenstellung und der Schließstellung beweglich sind. Beispielsweise ist ein linearer Bewegungsfreiheitsgrad radial zur Motorachse vorgesehen.

Es ist möglich, dass der Werkzeugträger durch eine Federanordnung in eine Ausgangslage oder Mittellage bezüglich der Werkzeughalterung belastet ist.

Es ist aber auch ein Antriebskonzept ohne schwimmende Lagerung oder bewegliche Lagerung des Werkzeugträgers möglich, beispielsweise entsprechend der nachfolgenden Ausgestaltung, wobei aber zu bemerken ist, dass auch bei dieser Ausgestaltung eine bewegliche oder schwimmende Lagerung des Werkzeugträgers an der oder einer Werkzeughalterung vorteilhaft vorgesehen sein kann. Bevorzugt ist vorgesehen, dass der Werkzeugantrieb einen ersten Antrieb für das erste Werkzeug und einen zweiten Antrieb für das zweite Werkzeug aufweist, die durch eine Steuerungseinrichtung der Vorteilhaft ist vorgesehen, dass ansteuerbar sind, wobei die Steuerungseinrichtung den ersten und den zweiten Antrieb derart ansteuert, dass das erste Werkzeug und das zweite Werkzeug zunächst in die Kontaktstellung verstellt werden und erst dann, wenn beide Werkzeuge in der Kontaktstellung sind, in Richtung der Bearbeitungsstellung durch die Antriebe angetrieben werden.

Zu einer solchen Ansteuerung der Antriebe dient beispielsweise eine Steuerungseinrichtung, insbesondere mit einem Mikroprozessor und einem geeigneten Steuerungsprogramm, welches Befehle enthält, bei deren Ausführung die Steuerungseinrichtung die Antriebe entsprechend ansteuert.

Wenn jedem Werkzeug der Werkzeuganordnung jeweils ein fluidischer Antrieb zugeordnet ist, kann können die Antriebe bis zum Erreichen der Kontaktstellung mit einer kleineren ersten Antriebskraft betätigt werden, beispielsweise mit geringem Fluid-Druck, und ausgehend von der Kontaktstellung bis zum Erreichen der Schließstellung mit einer zweiten, gegenüber der ersten Antriebskraft größeren Antriebskraft. Ohne weiteres ist aber ein Antrieb der Werkzeuge durch separate Antriebe auch beispielsweise mit zwei Elektromotoren, deren jeweiliges Drehmoment insbesondere durch eine Stromüberwachung überwacht wird, möglich.

Beide vorgenannten Maßnahmen, nämlich bewegliche Lagerung des Werkzeugträgers und/oder Ansteuerung zweier separater Antriebe für jedes Werkzeug der Werkzeuganordnung, tragen dazu bei, dass die Werkzeuge mit relativ wenig Kraft in Richtung der Kontaktstellung betätigt werden, sodass eine Umformung oder Verformung der Leiteranordnung bezüglich des Motor-Blechpakets nicht oder allenfalls in einem sehr geringen Maße stattfindet. Erst wenn beide Werkzeuge der Werkzeuganordnung die Kontaktstellung erreicht haben, wirken die Werkzeuge mit einer größeren Betätigungskraft, der zweiten Kraft, auf die Leiteranordnung ein, beispielsweise um diese zu klemmen, zu greifen oder zu schneiden.

Eine vorteilhafte Maßnahme stellt es dar, wenn der Werkzeugantrieb zu einem synchronen Antreiben des ersten Werkzeugs und des zweiten Werkzeugs aus der Offenstellung in die Schließstellung, vorzugsweise zumindest auf einem Bewegungsabschnitt ausgehend von der Kontaktstellung in Richtung der Bearbeitungsstellung, ausgestaltet ist. Es ist weiterhin zweckmäßig, wenn der Werkzeugantrieb die Werkzeuge ausgehend von der Offenstellung in Richtung der Schließstellung stets synchron antreibt. Dazu ist beispielsweise ein Übertragungsgetriebe oder Kopplungsgetriebe, mit dem die Werkzeuge zu einem synchronen Antrieb gekoppelt sind, vorteilhaft vorgesehen.

Bevorzugt ist vorgesehen, dass der Werkzeugantrieb einen Antriebsmotor und eine Getriebe, insbesondere ein Kurvengetriebe, zum synchronen Antreiben des ersten Werkzeugs und des zweiten Werkzeugs aufweist. Es ist aber auch möglich, dass beispielsweise durch einen hydraulischen Antrieb oder fluidischen, beispielsweise pneumatischen, Antrieb eine synchrone Betätigung der Werkzeuge relativ zueinander erfolgt.

Ein vorteilhaftes Konzept sieht vor, dass die Werkstück-Halterung an mindestens einem Schlitten der Positioniereinrichtung angeordnet ist, mit dem die Werkstück-Halterung relativ zu der Werkzeuganordnung, insbesondere entlang einer Stellachse oder einer Verstellungsbahn, verstellbar ist. Die Stellachse ist beispielsweise eine geradlinige Achse oder eine Gerade, die Verstellungsbahn kann auch eine Kurvenform aufweisen.

Ein alternatives oder ergänzendes Konzept sieht vor, dass die Werkzeuganordnung anhand mindestens eines Schlittens entlang einer Verstellachse oder Verstellungsbahn gelagert ist. Mithin können also eine oder beide, die Werkzeuganordnung und die Werkstück-Halterung an einem Schlitten oder einer Schlittenanordnung beweglich gelagert sein.

Insbesondere ist diese Maßnahme vorteilhaft, wenn mehrere Werkzeuganordnungen vorhanden sind, wie nachfolgend noch erläutert wird. Somit kann die Positioniereinrichtung anhand des mindestens einen Schlittens beispielsweise die Werkstück-Halterung von der einen Werkzeuganordnung zu anderen Werkzeuganordnung bewegen oder die Werkzeuganordnungen relativ zu der Werkstück-Halterung bewegen, insbesondere wenn diese ortsfest an einer Maschinenbasis der Bearbeitungsvorrichtung angeordnet ist. Eine der Werkzeuganordnungen dient beispielsweise zum Abschneiden von Leiteranordnungen, während die andere Werkzeuganordnung zum Entfernen, insbesondere zum Herausziehen, der Leiteranordnungen aus dem Motor-Blechpaket vorgesehen und ausgestaltet ist.

Es ist aber auch möglich, dass anhand des Schlittens oder der Positioniereinrichtung ein Ausziehen einer Leiteranordnung aus einer Nut anhand der Werkzeuganordnung bewirkbar ist. Dazu kann beispielsweise die Werkzeuganordnung oder die Werkstück-Halterung an einem Schlitten der Positioniereinrichtung angeordnet sein, um die Werkzeuganordnung und das Motor-Blechpaket voneinander weg zu verstellen, wenn die Werkzeuganordnung in Klemmeingriff oder Halteeingriff mit der Leiteranordnung ist.

Bevorzugt ist es, wenn die Werkstück-Halterung an einem Kreuzschlitten angeordnet ist oder einer Schlittenanordnung mit einem ersten und einem zweiten Schlitten angeordnet ist, deren Bewegungsachsen oder Stellachsen zueinander winkelig, insbesondere zueinander rechtwinkelig, sind. Somit ist es beispielsweise möglich, dass die Werkstück-Halterung entlang einer ersten Bewegungsachse oder Stellachse anhand des ersten Schlittens zwischen den Werkzeuganordnungen verstellbar ist.

Vorteilhaft ist vorgesehen, dass die Werkstück-Halterung an einem Motorachsen-Drehlager um eine Drehachse drehbar gelagert ist, die mit der Motorachse fluchtet, wenn das Motor-Blechpaket an der der Werkstück-Halterung gehalten ist, sodass das Motor-Blechpaket bezüglich der Motorachse anhand der Werkstück-Halterung drehbar ist, um in Umfangsrichtung bezüglich der Motorachse an dem Motor-Blechpaket in Winkelabständen angeordnete Leiteranordnungen bezüglich der Werkzeuganordnung zu positionieren. Dem Motorachsen-Drehlager ist vorzugsweise ein Positionierantrieb, insbesondere ein Drehantrieb, zum Drehantreiben der Werkstück-Halterung um die Drehachse des Motorachsen-Drehlager zugeordnet.

Bevorzugt ist vorgesehen, dass die Werkstück-Halterung an einem Schwenklager um eine Schwenkachse schwenkbar gelagert ist, um wahlweise die erste oder zweite Stirnseite des Motor-Blechpakets gegenüber der Werkzeuganordnung zu positionieren. Somit ist es möglich, mit ein und derselben Werkzeuganordnung an einander entgegengesetzten Seiten des Motor-Blechpakets vor dieses vorstehende Leiteranordnungen zu bearbeiten, beispielsweise abzuschneiden und/oder zu klemmen.

Weiterhin ist es zweckmäßig, wenn die Werkstück-Halterung zum stirnseitigen Abstützen des Motor-Blechpakets an mindestens einer Stirnseite des Motor-Blechpakets ausgestaltet ist. Eine vorteilhafte Maßnahme stellt es dar, wenn die Werkstück-Halterung mindestens eine Stirnseiten-Stützfläche zum Abstützen einer Stirnseite des Motor-Blechpakets aufweist. Ohne weiteres möglich sind mehrere Stirnseiten-Stützflächen, insbesondere einander gegenüberliegende Stirnseiten-Stützflächen, um einander entgegengesetzte Stirnseiten des Motor-Blechpakets abzustützen. Somit wird z.B. ein stirnseitiges Blech des Motor-Blechpakets an dem Blechpaket gehalten, sodass beispielsweise bei einem Ausziehen einer Leiteranordnung aus einer Nut des Motor-Blechpakets und/oder bei einem Abschneiden oder Ablängen der Leiteranordnung das stirnseitige Blech abgestützt ist und eine Verformung des Blechs vermieden wird.

Bei der Bearbeitungsvorrichtung ist vorteilhaft vorgesehen, dass die mindestens eine Stirnseiten-Stützfläche einen, insbesondere ringförmigen, Bodenflächenabschnitt einer Steckaufnahme der Werkstück-Halterung umfasst, in die das Motor-Blechpaket einsteckbar ist. Beispielsweise kann die Werkstück-Halterung in der Art eines Bechers oder einer Becheraufnahme ausgestaltet sein, in die das Motor-Blechpaket einsteckbar ist, ausgestaltet sein.

Bevorzugt ist vorgesehen, dass die mindestens eine Stirnseiten-Stützfläche an einem Stützkörper angeordnet ist, der relativ zu einer zum Halten des Motor-Blechpakets ausgestalteten, insbesondere als Steckaufnahme ausgestalteten, Werkstückaufnahme der Werkstück-Halterung verstellbar ist. Der Stützkörper kann beispielsweise eine Stützplatte umfassen. Es können aber auch mehrere Stützkörper vorgesehen sein, zwischen denen beispielsweise Abstände für vor das Motor-Blechpaket vorstehende Leiterabschnitte angeordnet sind. Zum Halten des Stützkörpers, insbesondere wenn dieser eine Plattenform aufweist oder als ein Ringkörper ausgestaltet ist, dienen beispielsweise Spannpratzen oder sonstige Spannkörper.

Bei der Bearbeitungsvorrichtung ist vorteilhaft vorgesehen, dass die mindestens eine Stirnseiten-Stützfläche einen Bestandteil einer Stirnseiten-Stützflächenanordnung mit mehreren Stirnseiten-Stützflächen bildet, die sich um die Motorachse erstrecken, wenn das Motor-Blechpaket an der Werkstück-Halterung angeordnet ist, und zwischen denen Abstände vorhanden sind, in die hinein sich Leiterabschnitte erstrecken können, die vor das Motor-Blechpaket vorstehen. Es können also mehrere, an separaten Stützkörpern angeordnete Stützflächen vorgesehen sein. Es ist aber auch möglich, dass eine Stirnseiten-Stützfläche oder die Stirnseiten-Stützfläche Aussparungen für vor das Motor-Blechpaket vorstehende Leiterabschnitte aufweist. Beispielsweise kann die vorgenannte Bodenfläche der Steckaufnahme derartige Aussparungen aufweist.

Eine vorteilhafte Maßnahme stellt es dar, wenn die Bearbeitungsvorrichtung eine erste Werkzeuganordnung und eine zweite Werkzeuganordnung aufweist, von denen eine Werkzeuganordnung zum Klemmen einer Leiteranordnung und eine Werkzeuganordnung zum Abschneiden einer Leiteranordnung ausgestaltet ist, und dass die Positioniereinrichtung zum Positionieren der Werkstück-Halterung mit dem daran gehaltenen Motor-Blechpaket relativ zu den Werkzeuganordnungen ausgestaltet ist.

Bevorzugt ist vorgesehen, dass das erste Werkzeug und/oder das zweite Werkzeug entlang einer geradlinigen oder bogenförmigen Bewegungsbahn zwischen der Offenstellung und der Schließstellung verstellbar gelagert ist. Für die Verstellung entlang der geradlinigen Bewegungsbahn ist beispielsweise eine lineare Lagerung des jeweiligen Werkzeugs vorgesehen. Zur Verstellung entlang der bogenförmigen Bewegungsbahn ist beispielsweise ein Schwenklager für das Werkzeug vorgesehen.

Die Bewegungsbahn verläuft vorteilhaft radial bezüglich einer Mittelachse der Werkstück-Halterung, die mit der Motorachse fluchtet, wenn das Motor-Blechpaket in der Werkstück-Halterung aufgenommen und gehalten ist.

Bei der Bearbeitungsvorrichtung ist vorteilhaft vorgesehen, dass das erste Werkzeug und/oder das zweite Werkzeug entlang einer Bewegungsbahn zwischen der Offenstellung und der Schließstellung verstellbar gelagert ist, die in radialer Richtung bezüglich der Motorachse des Motor-Blechpakets verläuft, wenn das Motor-Blechpaket an der Werkstück-Halterung gehalten ist.

Vorteilhaft ist vorgesehen, dass die Bearbeitungsvorrichtung eine Werkzeughalterung aufweist, an der mindestens zwei Werkzeuganordnungen mit jeweils einem ersten und einem zweiten Werkzeug angeordnet sind, wobei die Werkzeuganordnungen in Umfangsrichtung bezüglich einer Mittelachse der Werkzeughalterung in einem Winkelabstand zueinander angeordnet sind, um in einem Winkelabstand bezüglich der Motorachse nebeneinander angeordnete Leiteranordnungen simultan zu bearbeiten. Somit können also beispielsweise die Werkzeughalterung als Ganzes und die Werkstück-Halterung und somit relativ zu dem gegebenenfalls daran gehaltenen Motor-Blechpaket, verstellt werden, um gleichzeitig oder simultan mehrere Werkzeuganordnungen mit mehreren Leiteranordnungen in Eingriff zu bringen.

Insbesondere vorteilhaft ist es, wenn an der Werkzeughalterung ringförmig um die Mittelachse mehrere, vorteilhaft in gleichen Winkelabständen angeordnete, Werkzeuganordnungen angeordnet sind. Mit den Werkzeuganordnungen können mehrere Leiterabschnitte von Leiteranordnungen gleichzeitig bearbeitet werden. Es ist aber auch möglich, dass nur im Bereich eines Winkelsegments bezüglich der Mittelachse der Werkzeughalterung mindestens zwei Werkzeuganordnungen angeordnet sind, während andere Winkelsegmente ohne Werkzeuganordnung ausgestaltet sind.

Bevorzugt ist vorgesehen, dass die Werkzeuganordnungen an der Werkzeughalterung jeweils anhand eines Werkzeugträgers gehalten sind, wobei mindestens ein Werkzeugträger, vorzugsweise alle Werkzeugträger, an der Werkzeughalterung beweglich, insbesondere schwimmend, gelagert sind. Somit können sich also die Werkzeuganordnungen relativ zu den Leiteranordnungen, die durch die Werkzeuganordnungen jeweils zu bearbeiten sind, beispielsweise zu klemmen und/oder zuschneiden sind, sozusagen ausrichten. An dieser Stelle sei aber erwähnt, dass selbstverständlich auch bei an der Werkzeughalterung angeordneten Werkzeugen einer Werkzeuganordnung ein individueller Antrieb eines jeweiligen Werkzeugs durch einen einzelnen Antrieb möglich ist, um die Werkzeuge einzeln zunächst in die Kontaktstellung und ausgehend davon in die Bearbeitungsstellung zu verstellen.

Eine vorteilhafte Maßnahme stellt es dar, wenn die Werkzeughalterung an einem Werkzeug-Drehlager um eine Werkzeug-Drehachse drehbar gelagert ist und anhand eines Positionierantriebs um die Werkzeug-Drehachse drehantreibbar ist. Die Werkzeug-Drehachse fluchtet beispielsweise mit der Motorachse, wenn das Motor-Blechpaket an der Werkstück-Halterung gehalten ist, um die Werkzeuganordnungen bezüglich der Motorachse in Winkelabständen angeordneten Leiteranordnungen zu positionieren. Es ist auch möglich, dass die Werkzeug-Drehachse mit der Mittelachse der Werkzeughalterung fluchtet.

Bei der Bearbeitungsvorrichtung ist vorteilhaft vorgesehen, dass sie eine Ausschubeinrichtung mit mindestens einem Druckkörper zum Ausschieben mindestens einer Leiteranordnung aus einer Nut des Motor-Blechpakets aufweist. Die Ausschubeinrichtung liegt vorzugsweise der Werkzeuganordnung oder mindestens einer der Werkzeuganordnungen gegenüber. Somit kann beispielsweise die Werkzeuganordnung zum Ausziehen einer Leiteranordnung oder mehrerer Leiteranordnungen aus einer oder mehreren Nuten des Motor-Blechpakets vorgesehen und ausgestaltet sein und die Ausschubeinrichtung zu einem dieses Ausziehen unterstützenden oder vorbereitenden Ausschieben der mindestens einen Leiteranordnung vorgesehen und ausgestaltet sein.

Der mindestens eine Druckkörper ist beispielsweise in der Art eines Stempels oder Vorsprungs ausgestaltet. Ein Querschnitt des Druckkörpers ist vorzugsweise kleiner als ein Innenquerschnitt einer Nut des Motor-Blechpakets, sodass der Druckkörper in die Nut des Blechpakets eindringen kann.

Bevorzugt ist vorgesehen, dass die Ausschubeinrichtung eine Anordnung um eine Mittelachse kreisringförmig angeordneter, insbesondere als Vorsprünge oder als Stempel ausgestalteter Druckkörper zum Einwirken auf mehrere, ringförmig um die Motorachse des Motor-Blechpakets an dem Motor-Blechpaket angeordnete Leiteranordnungen aufweist. Die Druckkörper sind beispielsweise an einem Druckkörper-Träger ortsfest oder beweglich angeordnet.

Es ist aber auch möglich, dass der Druckkörper zum Ausüben von Druck auf mehrere, insbesondere um die Motorachse ringförmig angeordnete, Leiteranordnungen ausgestaltet und vorgesehen ist. Der mindestens eine Druckkörper kann eine ringförmige Druckfläche zum Ausüben von Druck auf mehrere, bezüglich der Motorachse ringförmig nebeneinander angeordnete Leiteranordnungen aufweisen.

Vorteilhaft ist vorgesehen, dass die Ausschubeinrichtung einen Ausschubantrieb aufweist, zum Betätigen des mindestens einen Druckkörpers in Richtung der Leiteranordnung aufweist, um die Leiteranordnung aus ihrer Nut auszuschieben. Es ist aber auch möglich, dass ergänzend oder alternativ zu einem derartigen Ausschubantrieb die Positioniereinrichtung zum Verstellen der Werkstück-Halterung relativ zu der, insbesondere ortsfest an einer Maschinenbasis der Bearbeitungsvorrichtung angeordneten, Ausschubeinrichtung ausgestaltet und vorgesehen ist. Beispielsweise kann die Werkstück-Halterung an einem Schlitten angeordnet sein, mit dem die Werkstück-Halterung als Ganzes relativ zu der Ausschubeinrichtung, beispielsweise relativ zu dem mindestens einen Druckkörper, verstellbar ist. Wenn dann das Motor-Blechpaket an der Werkstück-Halterung gehalten ist, ist das Motor-Blechpaket anhand der Positioniereinrichtung, beispielsweise anhand eines Linearantriebs oder Positionierantriebs derselben, relativ zu der Ausschubeinrichtung verstellbar.

Eine vorteilhafte Maßnahme stellt es dar, wenn der mindestens eine Druckkörper um eine Drehachse drehbar gelagert und durch einen Positionierantrieb um die Drehachse drehantreibbar ist, die mit der Motorachse fluchtet, wenn das Motor-Blechpaket an der Werkstück-Halterung gehalten ist. Besonders vorteilhaft ist es, wenn mehrere, beispielsweise mindestens zwei, bezüglich der Drehachse in Winkelabständen Druckkörper an einem Halter angeordnet sind, wobei der Halter um die um die Drehachse drehbar ist, um die Druckkörper relativ zu der Werkstück-Halterung zu verdrehen.

Bevorzugt ist vorgesehen, dass die Bearbeitungsvorrichtung eine Fördereinrichtung zum Wegfördern abgetrennter Leiterabschnitte aufweist. Die Fördereinrichtung umfasst beispielsweise mindestens ein Förderband. Weiterhin ist es möglich, dass die Fördereinrichtung einen Trichter oder dergleichen andere Vorrichtung zum Führen der abgetrennten Leiterabschnitte in Richtung des Förderbands aufweist. Die Fördereinrichtung kann auch eine Sammeleinrichtung, beispielsweise einen Sammelbehälter für abgetrennter Leiterabschnitte aufweisen. Die Sammeleinrichtung kann beispielsweise direkt unterhalb einer Werkzeuganordnung angeordnet sein, die zum Abschneiden oder Abtrennen von Leiterabschnitten vorgesehen und ausgestaltet ist.

Nachfolgend werden Ausführungsbeispiele der Erfindung anhand der Zeichnung erläutert. Es zeigen:

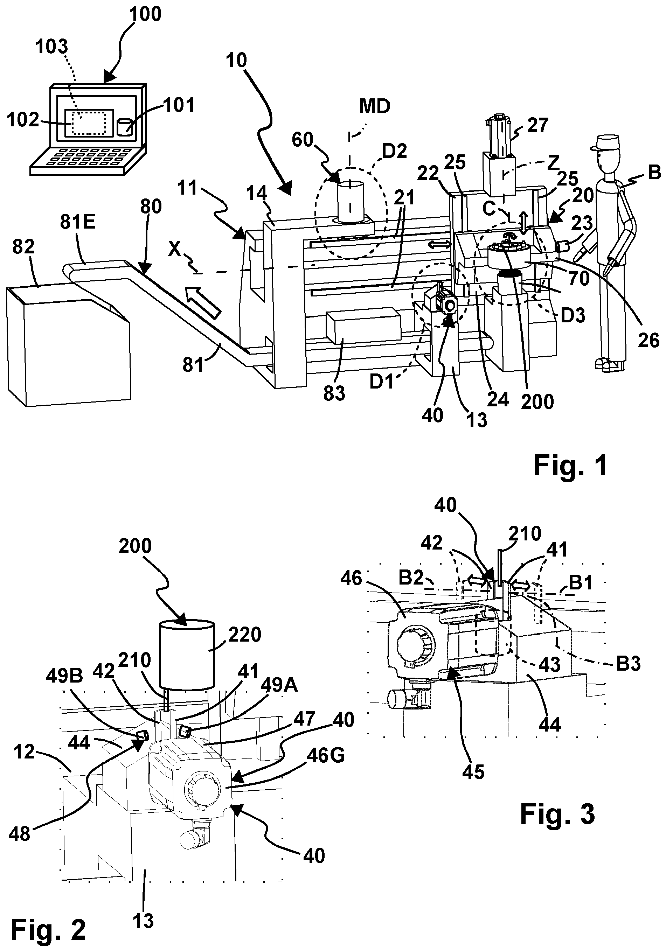

- Figur 1: eine perspektivische Schrägansicht einer Bearbeitungsvorrichtung,
- Figur 2: eine erste, nachfolgend als Schneid-Werkzeuganordnung bezeichnete Werkzeuganordnung zur schneidenden Bearbeitung von Leiteranordnungen in perspektivischer Schrägansicht, etwa entsprechend einem Ausschnitt D1 in Figur 1,
- Figur 3: eine weitere perspektivische Schrägansicht der Schneid-Werkzeuganordnung gemäß Figur 2,
- Figur 4: eine schematische Ansicht der Schneid-Werkzeuganordnung, wobei deren Werkzeuge in Offenstellung sind,
- Figur 5: die Schneid-Werkzeuganordnung gemäß Figur 4, wobei eines ihrer Werkzeuge in Kontaktstellung verstellt ist,
- Figur 6: die Schneid-Werkzeuganordnung entsprechend Figur 4 und 5, wobei beide Werkzeuge in die Kontaktstellung verstellt sind,
- Figur 7: die Schneid-Werkzeuganordnung gemäß Figuren 4-6, wobei die Werkzeuge in die Bearbeitungsstellung verstellt sind,

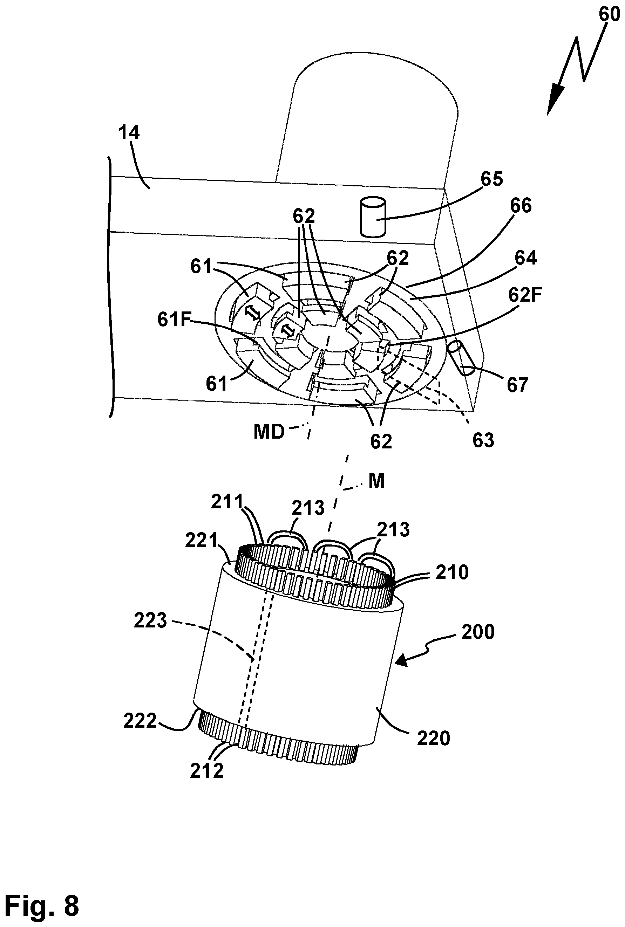

- Figur 8: eine perspektivische Schrägansicht von unten auf eine zweite, eine Klemm-Werkzeuganordnung bildende Werkzeuganordnung der Bearbeitungsvorrichtung gemäß Figur 1, etwa entsprechend einem Ausschnitt D2 in Figur 1,
- Figur 9: eine Ausschubeinrichtung der Bearbeitungsvorrichtung gemäß Figur 1, etwa entsprechend einem Ausschnitt D3 in Figur 1.

Eine Bearbeitungsvorrichtung 10 dient zur Bearbeitung von Leiteranordnungen 210 eines elektrischen Motors 200, wobei die Leiteranordnungen 210 vor ein Blechpaket 220 des Motors 200 vorstehen, nämlich mit Leiterabschnitten 211 und 212 vor dessen einander entgegengesetzten Stirnseiten 221 und 222 vorstehen.

Das Motor-Blechpaket 220 umfasst eine Vielzahl von in der Zeichnung nicht einzeln dargestellten Blechen oder Trafoblechen, die entlang einer Motorachse M des Motors 200 aufeinandergeschichtet oder aufeinandergestapelt sind.

Die Leiteranordnungen 210 sind in Nuten 223 (nur eine Nut 223 ist exemplarisch dargestellt) des Motor-Blechpakets 220 aufgenommen. Jeweils eine Leiteranordnung 210 ist in einer Nut 223 aufgenommen und kann einen oder mehrere elektrische Leiter, insbesondere Leiterstäbe, umfassen. Die Leiteranordnungen 220 umfassen beispielsweise Leiter aus Kupfer.

Das Motor-Blechpaket 220 bildet beispielsweise einen Bestandteil eines Stators des Motors 200. Durch Bestromung der Leiteranordnungen 210 anhand einer nicht dargestellten Bestromungseinrichtung ist beispielsweise ein Drehfeld zum Antreiben eines ebenfalls nicht dargestellten Rotors des Motors 200 erzeugbar, der um die Motorachse M drehbar bezüglich des Stators oder Motor-Blechpakets 220 in einem betriebsbereiten Zustand des Motors 200 drehbar gelagert ist.

Die Leiterabschnitte 211 umfassen beispielsweise Verbindungsabschnitte 213 oder Köpfe, mit denen die Leiterabschnitte 211 untereinander elektrisch verbunden sind. Mithin können also die Leiterabschnitte 211 zumindest abschnittsweise schräg zur Stirnseite 221 verlaufen. Auch die Leiterabschnitte 212 können anders als in der Zeichnung dargestellt schräg zu der Stirnseite 222 verlaufen.

Anhand der Bearbeitungsvorrichtung 10 sind die Leiteranordnungen 210 bearbeitbar.

Die Bearbeitungsvorrichtung 10 umfasst beispielsweise eine Maschinenbasis 11, an der eine Positioniereinrichtung 20 angeordnet ist.

Die Positioniereinrichtung 20 umfasst eine Linearführung 21 für einen Schlitten 22, anhand derer der Schlitten 22 entlang einer Stellachse X verstellbar ist. Zum Antreiben des Schlittens 14 dient ein Positionierantrieb 23. Die Linearführung 21 ist beispielsweise an einer bei Gebrauch im Wesentlichen vertikal verlaufenden Stützfläche 12 der Maschinenbasis 11 angeordnet.

An dem Schlitten 22 ist eine Linearführung 25 für einen Schlitten 26 angeordnet, anhand derer der Schlitten 26 entlang einer Stellachse Z verstellbar ist. Zum Antreiben des Schlittens 26 dient ein Positionierantrieb 27. Die Linearführung 25 ist beispielsweise an einer Stützfläche 24 des Schlittens 22 angeordnet. Die Stützfläche 24 und die Stützfläche 12 sind beispielsweise parallel zueinander.

An dem Schlitten 22 ist eine Werkstück-Halterung 30 zum Halten des Motor-Blechpakets 220 angeordnet.

Die Werkstück-Halterung 30 umfasst eine Steckaufnahme 31, in die das Motor-Blechpaket 220 einsteckbar ist. Dann stützt sich beispielsweise die Stirnseite 222 des Motor-Blechpakets 220 an einem ringförmigen Bodenflächenabschnitt 32 der Steckaufnahme 31 ab. An einer zu dem Bodenflächenabschnitt 32 gegenüberliegenden Seite ist ein Stützkörper 33 zum Abstützen der Stirnseite 221 des Motor-Blechpakets 220 vorgesehen. Der Stützkörper 33 ist beispielsweise anhand von Spanneinrichtungen, insbesondere Spannpratzen 34, verspannbar, sodass das Motor-Blechpaket zwischen dem Stützkörper 33 und den Bodenflächenabschnitt 32 verspannt ist.

Somit kann also beispielsweise das in der Werkstück-Halterung 30 aufgenommene Motor-Blechpaket 220 entlang der Stellachse Z verstellt werden, um beispielsweise mit Druckkörper 72 eine Ausschubeinrichtung 70 auf die Leiterabschnitte 211 oder 212 einzuwirken, um eine jeweilige Leiteranordnung 210 aus einer Nut 223 auszuschieben.

Alternativ oder ergänzend dazu ist es aber auch möglich, dass beispielsweise ein Ausschubantrieb 31 einen oder mehrere der Druckkörper 72 entlang einer Bewegungsbahn, insbesondere Bewegungsachse AA, antreibt, um auf eine Leiteranordnung 210 einzuwirken, um diese aus der Nut 223 auszuschieben, in der die Leiteranordnung 210 aufgenommen ist.

Die Druckkörper 72 sind beispielsweise an einem Druckkörper Träger 71 ringförmig um eine Mittelachse fest oder beweglich angeordnet, die mit der Motorachse M fluchtet, wenn das Motor-Blechpaket 220 in der Werkstück-Halterung 30 aufgenommen ist. Die bewegliche Anordnung der Druckkörper 72 ist beispielsweise dann vorgesehen, wenn der Ausschubantrieb 73 vorhanden ist.

Weiterhin möglich ist es, dass die Werkstück-Halterung 30 an einem Schwenklager 35 um eine Schwenkachse S schwenkbar bezüglich des Schlittens 26 gelagert ist. Die Schwenkachse S verläuft orthogonal zu den Stellachsen X und Z. Somit kann beispielsweise die Stirnseite 222 oder die Stirnseite 221 den Druckkörper 72 gegenüberliegen oder auch der nachfolgend erläuterten Schneid-Werkzeuganordnung 40.

Zur Positionierung des Motor-Blechpakets 220 relativ zu der Schneid-Werkzeuganordnung 40 kann auch ein Motorachsen-Drehlager 36 vorgesehen sein, anhand dessen die Werkstück-Halterung 30 um eine Drehachse C drehbar gelagert ist. Die Drehachse C fluchtet beispielsweise mit der Motorachse M, wenn das Blechpaket 220 in der Werkstück-Halterung 30 aufgenommen ist.

Das Motorachsen-Drehlager 36 ist an einem Drehantrieb 37, beispielsweise einem Direktantrieb, vorgesehen. Ein Stator 39 des Drehantriebs 37 ist beispielsweise an dem Schlitten 26 ortsfest angeordnet. Die Werkstück-Halterung 30 ist an einem Rotor 38 des Drehantriebs 37 angeordnet.

Wie erwähnt umfasst die Bearbeitungsvorrichtung 10 eine Schneid-Werkzeuganordnung 40 mit einem ersten Werkzeug 41 und einem zweiten Werkzeug 42, die beispielsweise als Schneidwerkzeuge oder Trennwerkzeuge ausgestaltet sind. Die Schneid-Werkzeuganordnung 40 ist ortsfest bezüglich der Maschinenbasis 11 angeordnet, beispielsweise an einem Träger 13 der Maschinenbasis 11 angeordnet.

Die Werkzeuge 41 und 42 sind an einem Werkzeugträger 43 entlang von Bewegungsachsen B1 und B2 beweglich gelagert. Die Bewegungsachsen B1 und B2 sind beispielsweise Linearachsen. Alternativ sind aber auch Bewegungsbahnen in Bogenform, insbesondere in Kreisbogenform möglich, was in Bezug auf das Werkzeug 42 durch eine Bewegungsbahn B3 in der Zeichnung angedeutet ist.

Der Werkzeugträger 43 seinerseits ist an einer Werkzeughalterung 44 beweglich gelagert, beispielsweise schwimmend gelagert. Die Werkzeughalterung 44 ist an dem Träger 13 angeordnet.

Zum Antreiben der Werkzeuge 41 und 42 dient ein Werkzeugantrieb 45 mit einem Antriebsmotor 46 sowie einem Getriebe 47, über welches der Antriebsmotor 46 die Werkzeuge 41 und 42 antreibt. Der Antriebsmotor 46 ist beispielsweise ein Elektromotor, ein hydraulischer Motor, ein fluidischer Motor, ein pneumatischer Motor oder dergleichen. Das Getriebe 47 dient dazu, die Werkzeuge 41 und 42 simultan aus einer Offenstellung OT, in der die Werkzeuge 41 und 42 gestrichelt dargestellt sind, entlang der Bewegungsachsen B1 und B2 in eine Schließstellung ST zu verstellen, in der die Werkzeuge 41 und 42 in durchgezogenen Linien dargestellt sind. Das Getriebe 47 ist beispielsweise in einem Gehäuse 46G des Antriebsmotors 46 angeordnet,

Die Werkzeuge 41 und 42 weisen Werkzeugflächen 41F und 42F auf, die beispielsweise als Schneidklingen ausgestaltet sind. Anhand der Werkzeuge 41 und 42 können somit beispielsweise Teile der Leiterabschnitte 211 oder die Leiterabschnitte 211 als Ganzes von einer jeweiligen Leiteranordnung 210 abgetrennt werden.

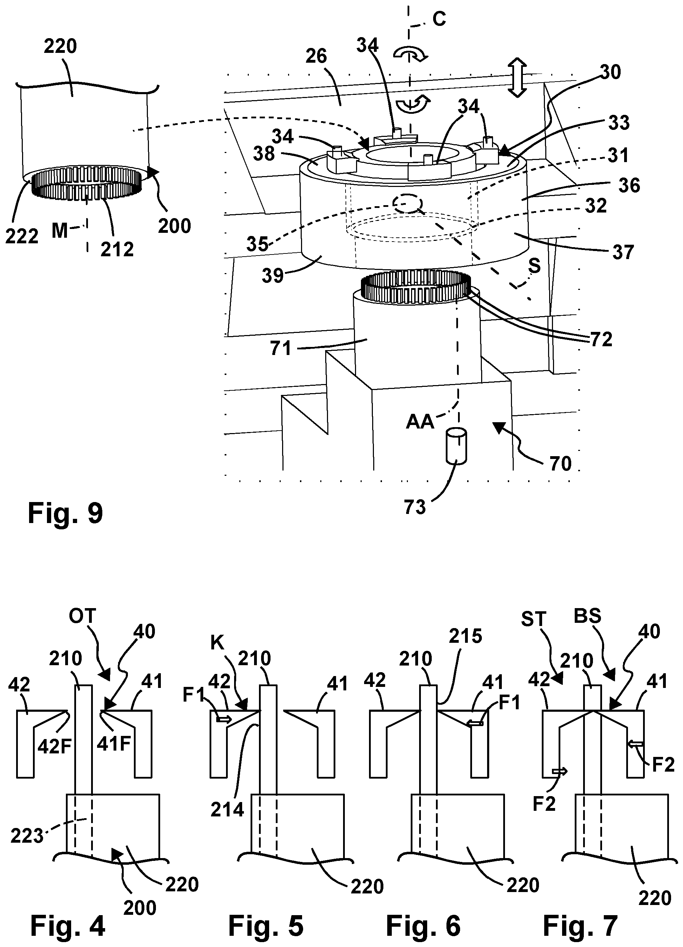

Der Werkzeugantrieb 45 treibt die Werkzeuge 41, 42 simultan aus der Offenstellung OT in Richtung der Schließstellung ST an. Dabei kann beispielsweise wie in den Figuren 4-7 dargestellt zunächst eines der Werkzeuge 41 oder 42, gemäß Figur 5 beispielsweise das Werkzeug 42, aus der Offenstellung OT in eine Kontaktstellung K gelangen, bei der das Werkzeug 42 an einer Leiterfläche 214 der Leiteranordnung 210 anliegt und sich daran mit einer Kraft F1 abstützt. Durch weitere Betätigung der Werkzeuge 42, 41 zueinander hin in Richtung der Schließstellung ST kann auch das andere Werkzeug 41 in die Kontaktstellung K gelangen (Figur 6) und sich mit der Kraft F1 an einer zu der Leiterfläche 214 entgegengesetzten Leiterfläche 215 abstützen, bevor beide Werkzeuge 41, 42 von dem Werkzeugantrieb 45 schließlich mit einer gegenüber der Kraft F1 größeren Kraft F2 in die Schließstellung ST verstellt werden, die zugleich einer Bearbeitungsstellung BS entspricht, in der die Werkzeugflächen 41F und 42F einander unmittelbar gegenüberliegen und einen Leiterabschnitt 211 der Leiteranordnung 210 abtrennen.

Sodann verstellt der Werkzeugantrieb 45 die Werkzeuge 41 und 42 wieder in die Offenstellung OT.

Anhand des Drehantriebs 37 kann anschließend die Werkstück-Halterung 30 um die Drehachse C weiter gedreht werden, um eine weitere Leiteranordnung 210 zwischen die Werkzeuge 41 und 42 zu positionieren.

Eine Klemm-Werkzeuganordnung 60 bildet eine weitere Werkzeuganordnung. Die Klemm-Werkzeuganordnung 60 ist beispielsweise an einem Träger 14 angeordnet. Anhand der Positioniereinrichtung 20 ist die Werkstück-Halterung 30 relativ zu der Klemm-Werkzeuganordnung 60 positionierbar.

Die Klemm-Werkzeuganordnung 60 dient zum Klemmen der Leiterabschnitte 211 oder 212, um eine oder mehrere Leiteranordnungen 210 aus den Nuten 223 auszuziehen.

Die Klemm-Werkzeuganordnung 60 ist ortsfest an dem Träger 14 angeordnet. Anhand einer Verstellung der Werkstück-Halterung 30 entlang der Stellachse Z, also beispielsweise anhand des Schlittens 26, ist das Motor-Blechpaket 220 von der Klemm-Werkzeuganordnung 60 weg verstellbar, sodass die von der Klemm-Werkzeuganordnung 60 gehaltenen Leiteranordnungen 210 aus den Nuten 223 ausziehbar sind.

Die Klemm-Werkzeuganordnung 60 umfasst mehrere Paarungen von Werkzeugen 61, 62, die jeweils an einem Werkzeugträger 63 beweglich zwischen einer voneinander weg bewegten Offenstellung OT und einer zueinander hin bewegten Schließstellung ST gelagert sind. Pfeile in der Figur 4 deuten an, dass die Beweglichkeit der Werkzeuge 61, 62 radial zu einer Mittelachse MD ist, wobei die Mittelachse MD und die Motorachse M anhand der Positioniereinrichtung 20 in eine miteinander fluchtende Stellung bringbar sind.

Die Werkzeuge 61, 62, weisen Werkzeugflächen 61F und 62F auf, die beispielsweise als Klemmflächen ausgestaltet sind und/oder eine Hakenkontur aufweisen. Somit können die Werkzeugflächen 61F und 62F beispielsweise in Klemmeingriff mit den Leiterabschnitt 211 und/oder in einen hakenden Eingriff mit den Verbindungabschnitten 213 gebracht werden.

Die Werkzeugträger 63, von denen einer schematisch in gestrichelten Linien dargestellt ist, sind an einer Werkzeughalterung 64 schwimmend beweglich gelagert. Die Werkzeughalterung 64 ist an dem Träger 14 angeordnet.

Somit kann also beispielsweise wie bereits im Zusammenhang mit den Werkzeugen 41 und 42 erläutert zunächst eines der Werkzeuge 61 oder 62, die an einem Werkzeugträger 63 angeordnet sind, aus der Offenstellung O OT in die Kontaktstellung K gelangen, bei dem das Werkzeug 61 oder 62 an beispielsweise an einem Leiterabschnitt 212 oder Verbindungsabschnitt 213 anliegt und sich daran abstützt, sodass das jeweils andere Werkzeug 62 oder 61 anhand des Werkzeugantriebs 65 ebenfalls in die Kontaktstellung K gebracht werden kann, um anschließend ausgehend von der Kontaktstellung K in die Schließstellung ST, die gleichzeitig einer Bearbeitungsstellung BS oder Klemmstellung entspricht, durch den Werkzeugantrieb 65 angetrieben zu werden. Dann ist beispielsweise ein Verbindungsabschnitt 213 zwischen ein Paar von Werkzeugen 61 und 62 geklemmt.

Der Werkzeugantrieb 65 kann eine oder mehrere Paarungen von Werkzeugen 61 oder 62 antreiben.

An dieser Stelle sei erwähnt, dass es ausreichen kann, wenn einige der Verbindungsabschnitte 213 durch Werkzeuge 61 und 62 geklemmt sind, um mehrere Leiteranordnungen 210 aus den Nuten 223 auszuziehen, da die Verbindungsabschnitte 213 mehrere Leiteranordnungen 210 fest miteinander verbinden können. Die vor die Stirnseite 221 vorstehenden Leiterabschnitte 211 sind also durch die Verbindungsabschnitte 213 beispielsweise derart fest miteinander verbunden, dass es ausreichen kann, einige der Verbindungsabschnitte 213 und/oder einige der Leiterabschnitte 211 durch die Klemm-Werkzeuganordnung 40 zu klemmen, um mehrere, vorzugsweise alle Leiteranordnungen 210 aus den Nuten 223 auszuziehen.

Es ist möglich, dass die Werkzeughalterung 64 anhand eines Werkzeug-Drehlagers 66 um eine Drehachse drehbar gelagert ist, beispielsweise die Mittelachse MD, sodass die Paarungen von Werkzeugen 61, 62 um die Mittelachse MD drehbar sind, sodass sie in Eingriff mit Winkelabstände bezüglich der Motorachse M aufweisende Leiterabschnitte 211 oder 212 bringbar sind. Zum Antreiben der Werkzeughalterung 64 um die Drehachse oder Mittelachse MD dient ein Positionierantrieb 67.

Anhand des Schlittens 22 ist die Werkstück-Halterung 30 zwischen der Schneid-Werkzeuganordnung 40, der Ausschubeinrichtung 70 sowie der Klemm-Werkzeuganordnung 60 verstellbar.

Ein bevorzugtes Konzept sieht vor, dass die Schneid-Werkzeuganordnung 40 zwischen der Ausschubeinrichtung 70 und der Klemm-Werkzeuganordnung 60 angeordnet ist.

Zum Wegfördern abgetrennter Leiterabschnitte 211 dient beispielsweise eine Fördereinrichtung 80. Die Fördereinrichtung 80 umfasst beispielsweise ein Förderband 81, welches an oder neben der Maschinenbasis 11 angeordnet ist. Das Förderband 81 verläuft beispielsweise mit einem Abschnitt unterhalb der Linearführung 21 und erstreckt sich bis zu einem Sammelbehälter 82 neben der Maschinenbasis 11, in die hinein die abgetrennten Leiterabschnitte 211 von einem Ende 81E des Förderbands 81 abfallen können. Oberhalb des Förderbands 81 kann eine Führung 83, beispielsweise ein Trichter, zum Führen der abgetrennten Leiterabschnitte 211 zu dem Förderband 81 hin vorgesehen sein.

Es ist aber auch möglich, dass mit dem Bezugszeichen 83 ein Sammelbehälter bezeichnet ist. In diesem Fall kann das Förderband 81 auch entfallen.

Zur Steuerung der Bearbeitungsvorrichtung 10 dient eine Steuerung 100. die Steuerung 100 treibt beispielsweise die Positionierantriebe 23, 27 an. Weiterhin ist vorgesehen, dass die Steuerung 100 den Ausschubantrieb 73 und den Drehantrieb 37 ansteuern kann. Schließlich ist es vorteilhaft, wenn die Steuerungseinrichtung 100 auch den Werkzeugantrieb 45 und den Werkzeugantrieb 65 ansteuern kann.

Die Steuerung 100 umfasst beispielsweise einen Prozessor 101, einen Speicher 102 sowie ein Steuerungsprogramm 103, welches in dem Speicher 102 gespeichert ist und Programmcode aufweist, der durch den Prozessor 101 ausführbar ist, um die oben erläuterten Schritte auszuführen und Bewegungsabläufe anzusteuern.

Alternativ zu dem Werkzeugantrieb 45 kann auch ein Werkzeugantrieb 48 vorgesehen sein, der separate Antriebe 49A und 49B zum individuellen Antreiben der Werkzeuge 41, 42 umfasst. Somit kann die Steuerungseinrichtung 100 beispielsweise die Antriebe 49A und 49B derart ansteuern, dass sie die Werkzeuge 41 und 42 zunächst mit der Kraft F1 in die Kontaktstellung K verstellen, bevor die Steuerungseinrichtung 100 die Antriebe 49A und 49B zur Verstellung der Werkzeuge 41 und 42 in die Bearbeitungsstellung BS mit der Kraft F2 ansteuert.

Es versteht sich, dass dieses Konzept auch in Bezug auf die Werkzeuganordnung 60 möglich ist, d. h. dass anstelle des Werkzeugantriebs 65 jeweils individuelle Antriebe in der Art der Antriebe 49A und 49B für die Werkzeuge 61 und 62, die durch die Steuerungseinrichtung 100 in der obigen Art angesteuert werden, möglich sind.

Die Erfindung betrifft also eine Bearbeitungsvorrichtung zur Bearbeitung, insbesondere zur Entfernung, von elektrischen Leiteranordnungen, die in Nuten eines Motor-Blechpakets eines Stators oder Rotors eines elektrischen Motors angeordnet sind, wobei die Leiteranordnungen vor mindestens eine Stirnseite des Motor-Blechpakets vorstehen, wobei die Bearbeitungsvorrichtung eine Werkstück-Halterung zum Halten des Motor-Blechpakets und eine Werkzeuganordnung mit einem ersten Werkzeug und einem zweiten Werkzeug aufweist, die an einem Werkzeugträger der Werkzeuganordnung angeordnet sind und einander gegenüberliegende Werkzeugflächen zur Einwirkung auf einander entgegengesetzte Leiterflächen einer vor eine Nut des Motor-Blechpakets vorstehenden Leiteranordnung aufweisen, wobei die Werkzeuganordnung einen Werkzeugantrieb zum Antreiben der Werkzeuge relativ zueinander zwischen einer Offenstellung und einer Schließstellung aufweist, wobei die Werkzeugflächen in der Offenstellung einen größeren Abstand zu einander aufweisen als in der Schließstellung, und wobei die Bearbeitungsvorrichtung eine Positioniereinrichtung zur Positionierung der Werkzeuganordnung und der Werkstück-Halterung relativ zueinander aufweist. Die Bearbeitungsvorrichtung ist zum Verstellen des ersten Werkzeugs und/oder des zweiten Werkzeugs bezüglich der Leiterflächen der Leiteranordnung in eine Kontaktstellung und ausgehend von der Kontaktstellung in eine Bearbeitungsstellung ausgestaltet, wobei die Werkzeugflächen in der Kontaktstellung mit einer ersten Kraft in Kontakt mit den Leiterflächen sind und in der Bearbeitungsstellung auf die Leiteranordnung mit einer gegenüber der ersten Kraft größeren zweiten Kraft zu einer Klemmung der Leiteranordnung und/oder zu einem Abschneiden eines Leiterabschnitts der Leiteranordnung einwirken.

## Patentansprüche

1. Bearbeitungsvorrichtung zur Bearbeitung, insbesondere zur Entfernung, von elektrischen Leiteranordnungen (210), die in Nuten (223) eines Motor-Blechpakets (220) eines Stators oder Rotors eines elektrischen Motors (200) angeordnet sind, wobei die Nuten (223) ringförmig um eine Motorachse (M) des Motor-Blechpakets (220) angeordnet sind und sich zwischen einander entgegengesetzten Stirnseiten des Motor-Blechpakets (220) erstrecken, wobei die Leiteranordnungen (210) jeweils mindestens einen elektrischen Leiter aufweisen und vor mindestens eine Stirnseite des Motor-Blechpakets (220) vorstehen, wobei die Bearbeitungsvorrichtung (10) eine Werkstück-Halterung (30) zum Halten des Motor-Blechpakets (220) und eine Werkzeuganordnung (40, 60) mit einem ersten Werkzeug (41, 61) und einem zweiten Werkzeug (42, 62) aufweist, die an einem Werkzeugträger (43, 63) der Werkzeuganordnung (40, 60) angeordnet sind und einander gegenüberliegende Werkzeugflächen (41F, 42F, 61F, 62F) zur Einwirkung auf einander entgegengesetzte Leiterflächen (214, 215) einer vor eine Nut (223) des Motor-Blechpakets (220) vorstehenden Leiteranordnung (210) aufweisen, wobei die Werkzeuganordnung (40, 60) einen Werkzeugantrieb (45, 65) zum Antreiben der Werkzeuge relativ zueinander zwischen einer Offenstellung (OT) und einer Schließstellung (ST) aufweist, wobei die Werkzeugflächen (41F, 42F, 61F, 62F) in der Offenstellung (OT) einen größeren Abstand zu einander aufweisen als in der Schließstellung (ST), und wobei die Bearbeitungsvorrichtung (10) eine Positioniereinrichtung (20) zur Positionierung der Werkzeuganordnung (40, 60) und der Werkstück-Halterung (30) relativ zueinander aufweist, **dadurch gekennzeichnet, dass** die Bearbeitungsvorrichtung (10) zum Verstellen des ersten Werkzeugs (41, 61) und/oder des zweiten Werkzeugs (42, 62) bezüglich der Leiterflächen (214, 215) der Leiteranordnung in eine Kontaktstellung (K) und ausgehend von der Kontaktstellung (K) in eine Bearbeitungsstellung (BS) ausgestaltet ist, wobei die Werkzeugflächen (41F, 42F, 61F, 62F) in der Kontaktstellung (K) mit einer ersten Kraft (F1) in Kontakt mit den Leiterflächen (214, 215) sind und in der Bearbeitungsstellung (BS) auf die Leiteranordnung (210) mit einer gegenüber der ersten Kraft (F1) größeren zweiten Kraft (F2) zu einer Klemmung der Leiteranordnung (210) und/oder zu einem Abschneiden eines Leiterabschnitts (211, 212) der Leiteranordnung (210) einwirken.

2. Bearbeitungsvorrichtung nach Anspruch 1 oder dem Oberbegriff des Anspruchs 1, **dadurch gekennzeichnet, dass** die Werkzeugflächen (41F, 42F, 61F, 62F) des ersten Werkzeugs und/oder des zweiten Werkzeugs (42, 62) eine Schneidklinge bilden und/oder aufweisen.

3. Bearbeitungsvorrichtung nach Anspruch 2, **dadurch gekennzeichnet, dass** die mindestens eine Schneidklinge, insbesondere beide Schneidklingen, eine geradlinige Form oder eine gebogene Form oder zueinander winkelige Klingenabschnitte hat und/oder dass die mindestens eine Schneidklinge als eine Messerklinge ausgestaltet ist und/oder dass die Schneidklingen aufeinander zu gerichtet sind und/oder dass die Schneidklingen in der Bearbeitungsstellung (BS) miteinander fluchten.

4. Bearbeitungsvorrichtung nach einem der vorhergehenden Ansprüche, **dadurch gekennzeichnet, dass** die Werkzeugflächen (41F, 42F, 61F, 62F) des ersten Werkzeugs (41, 61) und des zweiten Werkzeugs (42, 62) als Klemmflächen, insbesondere als Klemmbacken, ausgestaltet sind oder Klemmflächen aufweisen.

5. Bearbeitungsvorrichtung nach einem der vorhergehenden Ansprüche, **dadurch gekennzeichnet, dass** der Werkzeugträger (43, 63) der Werkzeuganordnung (40, 60) an einer Werkzeughalterung (44, 64) beweglich, insbesondere schwimmend, gelagert ist, sodass die Werkzeuge nacheinander in die Kontaktstellung (K) verstellbar sind, wobei sich ein Werkzeug nach Erreichen der Kontaktstellung (K) an der Leiteranordnung (210) abstützt, bis das andere Werkzeug in die Kontaktstellung (K) gelangt.

6. Bearbeitungsvorrichtung nach einem der vorhergehenden Ansprüche, **dadurch gekennzeichnet, dass** der Werkzeugantrieb (45, 65) einen ersten Antrieb (49A) für das erste Werkzeug (41, 61) und einen zweiten Antrieb (49B) für das zweite Werkzeug (42, 62) aufweist, die durch eine Steuerungseinrichtung (100) der Bearbeitungsvorrichtung ansteuerbar sind, wobei die Steuerungseinrichtung (100) den ersten und den zweiten Antrieb derart ansteuert, dass das erste Werkzeug (41, 61) und das zweite Werkzeug zunächst in die Kontaktstellung (K) verstellt werden und erst dann, wenn beide Werkzeuge in der Kontaktstellung (K) sind, in Richtung der Bearbeitungsstellung (BS) durch die Antriebe angetrieben werden, und/oder dass der Werkzeugantrieb (45, 65) zu einem synchronen Antreiben des ersten Werkzeugs (41, 61) und des zweiten Werkzeugs (42, 62) aus der Offenstellung (OT) in die Schließstellung (ST), vorzugsweise zumindest auf einem Bewegungsabschnitt ausgehend von der Kontaktstellung (K) in Richtung der Bearbeitungsstellung (BS), ausgestaltet ist und/oder dass der Werkzeugantrieb (45, 65) einen Antriebsmotor und eine Getriebe, insbesondere ein Kurvengetriebe, zum synchronen Antreiben des ersten Werkzeugs (41, 61) und des zweiten Werkzeugs (42, 62) aufweist.

7. Bearbeitungsvorrichtung nach einem der vorhergehenden Ansprüche, **dadurch gekennzeichnet, dass** die Werkstück-Halterung (30) an mindestens einem Schlitten der Positioniereinrichtung (20) angeordnet ist, mit dem die Werkstück-Halterung (30) relativ zu der Werkzeuganordnung (40, 60) verstellbar ist, und/oder dass die Werkstück-Halterung (30) an einem Motorachsen (M)-Drehlager (36) um eine Drehachse drehbar gelagert ist, die mit der Motorachse (M) fluchtet, wenn das Motor-Blechpaket (220) an der der Werkstück-Halterung (30) gehalten ist, sodass das Motor-Blechpaket (220) bezüglich der Motorachse (M) anhand der Werkstück-Halterung (30) drehbar ist, um in Umfangsrichtung bezüglich der Motorachse (M) an dem Motor-Blechpaket (220) in Winkelabständen angeordnete Leiteranordnungen (210) bezüglich der Werkzeuganordnung (40, 60) zu positionieren, und/oder dass die Werkstück-Halterung (30) an einem Schwenklager (35) um eine Schwenkachse schwenkbar gelagert ist, um wahlweise die erste oder zweite Stirnseite des Motor-Blechpakets (220) gegenüber der Werkzeuganordnung (40, 60) zu positionieren, und/oder dass die Werkstück-Halterung (30) mindestens eine Stirnseiten-Stützfläche zum Abstützen einer Stirnseite des Motor-Blechpakets (220) aufweist.

8. Bearbeitungsvorrichtung nach Anspruch 7, **dadurch gekennzeichnet, dass** die mindestens eine Stirnseiten-Stützfläche einen, insbesondere ringförmigen, Bodenflächenabschnitt einer Steckaufnahme (31) der Werkstück-Halterung (30) umfasst, in die das Motor-Blechpaket (220) einsteckbar ist, und/oder dass die mindestens eine Stirnseiten-Stützfläche an einem Stützkörper (33) angeordnet ist, der relativ zu einer zum Halten des Motor-Blechpakets (220) ausgestalteten, insbesondere als Steckaufnahme (31) ausgestalteten, Werkstückaufnahme der Werkstück-Halterung (30) verstellbar ist, und/oder dass die mindestens eine Stirnseiten-Stützfläche einen Bestandteil einer Stirnseiten-Stützflächenanordnung mit mehreren Stirnseiten-Stützflächen bildet, die sich um die Motorachse (M) erstrecken, wenn das Motor-Blechpaket (220) an der Werkstück-Halterung (30) angeordnet ist, und zwischen denen Abstände vorhanden sind, in die hinein sich Leiterabschnitte (211, 212) erstrecken können, die vor das Motor-Blechpaket (220) vorstehen.

9. Bearbeitungsvorrichtung nach einem der vorhergehenden Ansprüche, **dadurch gekennzeichnet, dass** sie eine erste Werkzeuganordnung (40, 60) und eine zweite Werkzeuganordnung (40, 60) aufweist, von denen eine Werkzeuganordnung (40, 60) zum Klemmen einer Leiteranordnung (210) und eine Werkzeuganordnung (40, 60) zum Abschneiden einer Leiteranordnung (210) ausgestaltet ist, und dass die Positioniereinrichtung (20) zum Positionieren der Werkstück-Halterung (30) mit dem daran gehaltenen Motor-Blechpaket (220) relativ zu den Werkzeuganordnungen (40, 60) ausgestaltet ist.

10. Bearbeitungsvorrichtung nach einem der vorhergehenden Ansprüche, **dadurch gekennzeichnet, dass** das erste Werkzeug (41, 61) und/oder das zweite Werkzeug (42, 62) entlang einer geradlinigen oder bogenförmigen Bewegungsbahn zwischen der Offenstellung (OT) und der Schließstellung (ST) verstellbar gelagert ist und/oder dass das erste Werkzeug (41, 61) und/oder das zweite Werkzeug (42, 62) entlang einer Bewegungsbahn zwischen der Offenstellung (OT) und der Schließstellung (ST) verstellbar gelagert ist, die in radialer Richtung bezüglich der Motorachse (M) des Motor-Blechpakets (220) verläuft, wenn das Motor-Blechpaket (220) an der Werkstück-Halterung (30) gehalten ist.

11. Bearbeitungsvorrichtung nach einem der vorhergehenden Ansprüche, **dadurch gekennzeichnet, dass** sie eine Werkzeughalterung (44, 64) aufweist, an der mindestens zwei Werkzeuganordnungen (40, 60) mit jeweils einem ersten und einem zweiten Werkzeug angeordnet sind, wobei die Werkzeuganordnungen (40, 60) in Umfangsrichtung bezüglich einer Mittelachse der Werkzeughalterung (44, 64) in einem Winkelabstand zueinander angeordnet sind, um in einem Winkelabstand bezüglich der Motorachse (M) nebeneinander angeordnete Leiteranordnungen (210) simultan zu bearbeiten, wobei vorteilhaft vorgesehen ist, dass die Werkzeuganordnungen (40, 60) an der Werkzeughalterung (44, 64) jeweils anhand eines Werkzeugträgers (43, 63) gehalten sind, wobei mindestens ein Werkzeugträger (43, 63), vorzugsweise alle Werkzeugträger (43, 63), an der Werkzeughalterung (44, 64) beweglich, insbesondere schwimmend, gelagert sind, und/oder dass die Werkzeughalterung (44, 64) an einem Werkzeug-Drehlager (66) um eine Werkzeug-Drehachse drehbar gelagert ist und anhand eines Positionierantriebs um die Werkzeug-Drehachse drehantreibbar ist, wobei die Werkzeug-Drehachse mit der Motorachse (M) fluchtet, wenn das Motor-Blechpaket (220) an der Werkstück-Halterung (30) gehalten ist, um die Werkzeuganordnungen (40, 60) bezüglich der Motorachse (M) in Winkelabständen angeordneten Leiteranordnungen (210) zu positionieren.

12. Bearbeitungsvorrichtung nach einem der vorhergehenden Ansprüche, **dadurch gekennzeichnet, dass** die erste Kraft (F1) so klein ist, dass die Leiteranordnung (210) durch die jeweilige Werkzeugfläche (41F, 42F, 61F, 62F) nicht relativ zu dem Motor-Blechpaket (220) verformbar ist und/oder nicht schneidbar ist.

13. Bearbeitungsvorrichtung nach einem der vorhergehenden Ansprüche, **dadurch gekennzeichnet, dass** sie eine Ausschubeinrichtung (70) mit mindestens einem Druckkörper (72) zum Ausschieben mindestens einer Leiteranordnung (210) aus einer Nut (223) des Motor-Blechpakets (220) aufweist.

14. Bearbeitungsvorrichtung nach Anspruch 13, **dadurch gekennzeichnet, dass** die Ausschubeinrichtung (70) eine Anordnung um eine Mittelachse kreisringförmig angeordneter, insbesondere als Vorsprünge ausgestalteter Druckkörper (72) zum Einwirken auf mehrere, ringförmig um die Motorachse (M) des Motor-Blechpakets (220) an dem Motor-Blechpaket (220) angeordnete Leiteranordnungen (210) aufweist und/oder dass die Ausschubeinrichtung (70) einen Ausschubantrieb (73) aufweist, zum Betätigen des mindestens einen Druckkörpers (72) in Richtung der Leiteranordnung (210) aufweist, um die Leiteranordnung (210) aus ihrer Nut (223) auszuschieben, und/oder dass der mindestens eine Druckkörper (72) um eine Drehachse drehbar gelagert und durch einen Positionierantrieb um die Drehachse drehantreibbar ist, die mit der Motorachse (M) fluchtet, wenn das Motor-Blechpaket an der Werkstück-Halterung (30) gehalten ist.

15. Bearbeitungsvorrichtung (10) nach einem der vorhergehenden Ansprüche, **dadurch gekennzeichnet, dass** sie eine Fördereinrichtung (80) zum Wegfördern abgetrennter Leiterabschnitte (211, 212) aufweist.
